# EUROPÄISCHE PATENTANMELDUNG

(11) **EP 3 822 928 A1**
(43) Veröffentlichungstag der Anmeldung: **19.05.2021**
(21) Anmeldenummer: 20207329.2
(22) Anmeldetag: 12.11.2020
(51) Int. Cl.: G07F 11/00, G07F 11/16, G07F 11/38, G07F 11/64, A01G 9/14, A01G 9/04

(54) **AUTOMAT ZUM VERKAUF VON PFLANZEN, INSBESONDERE NUTZ- UND/ODER ZIERPFLANZEN WIE SALATE, GEMÜSE, BLUMEN UND DERGLEICHEN SOWIE KULTURRINNE ZUR AUFNAHME SOLCHER PFLANZEN**

(30) Priorität: 12.11.2019 DE 102019130537
(71) Anmelder: Haubner, Jochen Friedrich, 90427 Nürnberg (DE)
(72) Erfinder: Haubner, Jochen Friedrich, 90427 Nürnberg (DE)
(74) Vertreter: Kurz, Andreas

(57) **Zusammenfassung**

Die Erfindung betrifft einen Automaten (1) zum Verkauf von Pflanzen (25), insbesondere Nutz- und Zierpflanzen wie Salate, Gemüse, Blumen und dergleichen. Der Automat (1) besitzt ein Gehäuse (2), in dem eine regalartige Aufnahmeeinrichtung (20) mit Aufnahmen (24) zum Offerieren der Pflanzen (25) auf Sicht angeordnet ist, eine Bedieneinrichtung (19) zum Auswählen und Bezahlen der ausgewählten Pflanze (25), eine Ausgabeeinrichtung (29) zur Entnahme der ausgewählten Pflanze (25) aus dem Automat (1), eine Positioniereinrichtung (28) zur Entnahme der ausgewählten Pflanze (25) aus der Aufnahmeeinrichtung (20) und Ablage der Pflanze (25) in der Ausgabeeinrichtung (29), und eine Steuerungseinrichtung zur Verarbeitung der Daten aus der Bedieneinrichtung sowie Steuerung der Positioniereinrichtung (28) und Ausgabeeinrichtung (29). Die Erfindung betrifft ferner eine Kulturrinne (23) zur Aufnahme oben genannter Pflanzen (25) mit einem Halteboden (68), in dem mindestens eine Aufnahme (24) zur Halterung jeweils einer Pflanze (25) angeordnet ist. Ein erfindungsgemäßer Automat (1) bzw. erfindungsgemäße Kulturrinne (23) ermöglichen den Verkauf frischer und gegebenenfalls auch unverpackter bzw. teilverpackter Pflanzen (25) unabhängig von Tageszeit und Personal.

## Beschreibung

Die Erfindung betrifft einen Automaten zum Verkauf von Pflanzen, insbesondere Nutz- und/oder Zierpflanzen wie Salate, Gemüse, Blumen und dergleichen sowie eine Kulturrinne zur Aufnahme solcher Pflanzen.

Automaten zum verkaufsbereiten Offerieren von Waren sind weit verbreitet und werden häufig an stark frequentierten Orte wie zum Beispiel Tankstellen, Bahnhöfen, Mensen, Sportstätten etc. aufgestellt, um dort unabhängig von der Tageszeit und Anwesenheit von Personal Waren zum Kauf anbieten zu können. In der Regel handelt es bei den Waren um Getränke, Süßigkeiten, Snacks, Zigaretten etc., die einem Käufer in abgepackter Form im Verkaufsautomat zur Auswahl angeboten und nach Kauf an den Käufer ausgegeben werden.

Ein derartiger Verkaufsautomat ist beispielsweise aus der DE 20 2018 004 258 U1 bekannt und setzt voraus, dass die Ware in abgepacktem Zustand vorliegt. Ein Verkauf vor allem frischer unverpackter oder teil verpackter Pflanzen wie zum Beispiel Salate, Gemüse oder Blumen ist mit derartigen Automaten jedoch nicht möglich. Zum einen würden Lebensmittel in derartigen Automaten schnell welk, was potentielle Käufer aufgrund der damit verbundenen Qualitätseinbußen vom Kauf abhält. Zum anderen handelt es sich bei derartigen Waren um keine in Größe, Form und Beschaffenheit genormten Produkte, so dass das Handling dieser Waren innerhalb des Automaten vergleichsweise schwierig ist. Bei druckempfindlichen Waren wird das Handling zusätzlich erschwert.

Im Zusammenhang mit der Anzucht von Nutzpflanzen in Gewächshäusern und in Freilandkulturen sind Kulturrinnen bekannt, in denen die Nutzpflanzen bei ausreichender Bewässerung in einem Pflanzsubstrat bis zu ihrem Verkauf gezogen werden. In der DE 38 39 664 A1 ist beispielsweise eine Kulturrinne beschrieben, die über ihre Länge eine Vielzahl Pflanzentöpfe mit darin wachsenden Nutzpflanzen aufnimmt. Die Bewässerung und Düngung erfolgt über den unteren Teil der Kulturrinne, der aufgrund seiner Neigung in Längsrichtung als Gerinne dient. Die Entnahme der Nutzpflanze aus der Kulturrinne geschieht ausschließlich von oben, weswegen solche Kulturrinnen nicht für eine Verwendung in einem Verkaufsautomaten geeignet sind.

Vor diesem Hintergrund liegt der Erfindung die Aufgabe zugrunde, Pflanzen insbesondere Nutz- und/oder Zierpflanzen wie zum Beispiel Salate, Gemüse, Blumen und dergleichen in einem Automaten zum Verkauf anzubieten, insbesondere in frischem und unverpackten oder lediglich teilverpacktem Zustand und ohne Qualitätseinbußen bei den Pflanzen hinnehmen zu müssen.

Diese Aufgabe wird durch einen Automaten mit den Merkmalen des Anspruchs 1 gelöst sowie einer Kulturrinne mit den Merkmalen des Anspruchs 13.

Vorteilhafte Ausführungsformen ergeben sich aus den Unteransprüchen.

Gegenstand der Erfindung ist das Verkaufen von Pflanzen mittels eines Automaten, also ohne unmittelbares Zutun durch eine Person. Wird in diesem Zusammenhang nachfolgend allgemein von Pflanze gesprochen, so fallen unter diesen Begriff auch Teile einer Pflanze oder mehrere Pflanzen sowie Pflanzen, die noch Photosynthese betreiben, also leben.

Bislang hat die vorherrschende Meinung darin bestanden, dass Pflanzen, insbesondere Nutz- und/oder Zierpflanzen wie Salate, Gemüse und dergleichen, aus Gründen der gewünschten Frische und Qualität sowie der Handhabung der Pflanze beim Kaufvorgang nur über die Theke bzw. Auslage oder Regal zu verkaufen seien. Es ist das Verdienst der Erfindung, sich von dieser Vorstellung gelöst zu haben und erstmals einen Automaten bereitzustellen, der einem Käufer eine Anzahl insbesondere frischer und un- oder teilverpackter Pflanzen offeriert, eine Auswahl ermöglicht und den Bezahl- und Ausgabevorgang abwickelt. Für den Betreiber erfindungsgemäßer Automaten eröffnet sich daher zunächst der Vorteil, einem breiten Käuferpublikum unabhängig von Zeit und Personal Pflanzen zum Kauf anbieten zu können. Allein die Möglichkeit rund um die Uhr ohne zusätzliche Personalkosten Pflanzen verkaufen zu können, erlaubt den Betreibern einen erheblichen merkantilen Vorteil zu erwirtschaften.

Von Seiten der Käufer besteht ein großer Vorteil darin, Pflanzen wie zum Beispiel Salate, Gemüse, Blumen und dergleichen unabhängig von Ladenöffnungszeiten einkaufen zu können, wobei im Vergleich zur Thekenware keine Qualitätseinbußen hingenommen werden müssen. Mit Blick auf die Hygiene erweist sich ein erfindungsgemäßer Automat gegenüber dem Verkauf über die Auslage ebenfalls als vorteilhaft, da die Pflanzen erst nach dem Kauf in Kontakt mit Personen kommen, und nicht schon händisch bei der Begutachtung und Auswahl durch beliebige Kaufinteressierte.

Für den Käufer erweist es sich zudem als vorteilhaft, dass ihm in einem erfindungsgemäßen Automaten eine Vielzahl Pflanzen präsentiert werden, unter denen er die freie Auswahl hat. Der Käufer kann sich gezielt für eine von ihm bevorzugte Pflanze entscheiden, die dann von der Positioniereinrichtung in die Ausgabeeinrichtung gelegt wird.

Ein weiterer Vorteil erfindungsgemäßer Automaten besteht darin, dass Pflanzen auch unverpackt verkauft werden können. Verpackungsmüll wie Folien, Beutel und dergleichen wird auf diese Weise vermieden, was zum Schutz der Umwelt beiträgt und aufgrund eines gesteigerten Umweltbewusstseins bei vielen Käufern ein zusätzliches Kaufargument darstellt.

Zu den genannten Zwecken kann ein erfindungsgemäßer Automat mit einer Aufnahmeeinrichtung ausgestattet sein, bei der die Pflanzen derart in Aufnahmen gehalten sind, dass deren Handling durch eine Positioniereinrichtung möglichst einfach und zuverlässig ist. So erlaubt eine erfindungsgemäße Aufnahmeeinrichtung durch ihre seitlich offene Bauart eine Entnahme der Pflanze über die offene, frei zugängliche Seite. Ein geeigneter Greifer kann bei einer solchen Ausgestaltung der Aufnahmeeinrichtung eine Pflanze mit nur einer Linearbewegung aus der Aufnahme holen. Dazu genügt das Vorsehen lediglich eines Linearantriebs, was den konstruktiven Aufwand der Positioniereinrichtung und damit eines erfindungsgemäßen Automaten beträchtlich reduziert.

Vorzugsweise besitzt eine erfindungsgemäße Positioniereinrichtung noch mindestens einen weiteren Linearantrieb, der quer zum ersten Linearantrieb wirkt und der bereits ausreicht, um bei Verwendung einer Aufnahmeeinrichtung mit nur einer Kulturrinne den Transport einer Pflanze zur Ausgabeeinrichtung zu bewerkstelligen. Von besonderem Vorteil ist jedoch der Einsatz von insgesamt drei Linearantrieben, da damit auch regalartig gestaltete Aufnahmeeinrichtung mit mehreren Kulturrinnen übereinander vom Greifer der Positioniereinrichtung bedient werden können.

Als alternative Ausführungsform kann eine erfindungsgemäße Positioniereinrichtung auch einen Roboter umfassen, dessen Arm mit Greifer am Ende um ein, zwei oder drei Achsen drehbar ist, um eine Pflanze aus einer Aufnahme zu entnehmen und im Ausgabefach abzulegen. Es ist auch möglich, einen solchen Roboter mit einem oder mehreren Linearantrieb zu kombinieren, beispielsweise mit einem Linearantrieb in x-Richtung und/oder z-Richtung, um auch größere Aufnahmeeinrichtungen bedienen zu können.

Die Linearantriebe in x-, y- und/oder z-Richtung besitzen jeweils einen Schlitten, der entlang von Führungsprofilen bewegbar ist. Für den Antrieb des Schlittens kommen erfindungsgemäß die Kombinationen Zahnstange - Zahnrad, Zahnriemen bzw. Kette - Zahnrad, Spindel - Spindelmutter, Zylinderkolbensysteme und dergleichen in Frage.

In besonders vorteilhafter Weiterbildung der Erfindung weist ein Automat eine Bewässerungseinrichtung und vorzugsweise auch eine Entwässerungseinrichtung auf. Durch Zufuhr von Wasser bzw. Feuchtigkeit zu den in den Aufnahmen gehaltenen Pflanzen können diese länger frisch gehalten werden, was die mögliche Verweildauer einer Pflanze im Automaten verlängert ohne deren Qualität nennenswert zu mindern. Dieser Vorteil kann durch das Vorsehen einer Klimatisierung des Innenraums des Automaten weiter gesteigert werden.

Beispielsweise kann zu oben genanntem Zweck ein gerinneartiger Bewässerungsboden unterhalb der Aufnahmen als Teil der Bewässerungseinrichtung vorgesehen sein. Der Abstand zwischen Aufnahmen und Bewässerungsboden ist derart, dass die Pflanzen mit ihren Wurzeln bis zum Bewässerungsboden reichen. Über einen Zulauf wird Wasser auf den Bewässerungsboden gegeben, das von den Wurzeln der Pflanzen in der notwendigen Menge aufgenommen wird.

Der Bewässerungsboden kann dabei gleichzeitig zur Entwässerung dienen, indem er einen Ablauf aufweist, beispielsweise an der dem Zulauf gegenüberliegenden Seite des Bewässerungsbodens, über den überschüssiges Wasser abgeleitet wird. Vorzugsweise weist ein solcher Be- und Entwässerungsboden ein Gefälle in Längsrichtung und/oder Querrichtung auf.

Gemäß einer weiteren Ausführungsform der Erfindung verläuft unterhalb der Aufnahmen und gegebenenfalls auch unterhalb des Bewässerungsbodens ein Auffangboden, der zum Auffangen von Wasser und Erde geeignet ist und auf diese Weise unterhalb angeordnete Pflanzen und Maschinenteile vor Verschmutzung schützt. Insbesondere nimmt der Auffangboden Tropfwasser, Erdpartikel und Pflanzenteile auf, die beim Herausnehmen einer Pflanze aus einer Aufnahme nach unten fallen. Zu diesem Zweck ist der Auffangboden vorteilhafterweise breiter ausgestaltet als die Aufnahmen für die Pflanzen. Beispielsweise beträgt die Breite des Auffangbodens mindesten der doppelten Breite der Aufnahmen, insbesondere mindestens der dreifachen Breite oder vierfachen Breite

Besonders bevorzugt ist es, wenn ein solcher Auffangboden wannenförmig ausgebildet ist oder aufgrund eines Quergefälles zusammen mit einem aufrechten Steg entlang eines oder beider Längsränder ein Gerinne in Längsrichtung bildet. Vorteilhafterweise weist der Auffangboden zusätzlich ein Längsgefälle auf, um das aufgefangene Wasser einem Entwässerungssystem oder Kreislaufsystem zuzuführen.

Eine besondere Ausführungsform der Erfindung sieht vor, dass Entwässerungsboden und Auffangboden von ein und demselben Bauteil gebildet sind, das somit eine Doppelfunktion innehat und was eine kompakte Bauweise ermöglicht und Material spart. Bei dieser Ausführungsform können Entwässerungsboden und Auffangboden auch Teil desselben Entwässerungs- oder Kreislaufsystems sein.

Daneben ist es ebenso möglich, dass Entwässerungsboden und Auffangboden separate Bauteil sind, die unterhalb des Auffangbodens parallel zueinander verlaufen. Vorzugsweise steht in diesem Fall der freie Längsrand des Auffangbodens über den freien Längsrand des schmäleren Entwässerungsbodens über. In diesem Fall besteht die Möglichkeit, dass Entwässerungsboden und Auffangboden unterschiedlichen Entwässerungs- oder Kreislaufsystemen zugeordnet sind.

Eine erfindungsgemäße Kulturrinne besitzt vorzugsweise Aufnahmen, die sich an definierten Positionen innerhalb der Aufnahmeeinrichtung befinden und in denen die Pflanzen in vorbestimmter räumlicher Lage gehalten sind. Auf diese Weise wird das zielgerichtete und sichere Ergreifen der Pflanzen durch den Greifer erleichtert. In einer einfachen und zugleich kompakten Umsetzung dieses Gedankens ist hierzu ein Halteboden vorgesehen, in dem die Aufnahmen angeordnet sind. Beispielsweise kann der Halteboden aus Blech gefertigt sein, bei dem die Aufnahmen durch Ausstanzen hergestellt sind.

Vorzugsweise ist die Aufnahmeeinrichtung bzw. der Halteboden zumindest auf einer Längsseite offen, das heißt die Aufnahmeeinrichtung bzw. der Halteboden ist entlang dieser Längsseite frei von Teilen, die den Zugriff der Positioniereinrichtung von der Längsseite her verhindern würden. Dadurch ist es ein Bestücken der Aufnahmen mit Pflanzen bzw. Entnehmen von Pflanzen aus den Aufnahmen von der offenen Seite her möglich, indem die Positioniereinrichtung mit ihrem Greifer unter den Halteboden bzw. zwischen Halteboden und Entwässerungsboden bewegt werden kann. Die Zugänglichkeit zu den Aufnahmen wird auf diese Weise entscheidend verbessert, mit dem Vorteil eines leichteren und effizienteren Handlings der Pflanzen. Zu diesem Zweck können die Aufnahmen von Randausnehmungen im Halteboden gebildet sein, also von Ausnehmungen, die sich bis zu dem freien Längsrand des Haltebodens erstrecken.

Gemäß einer weiteren vorteilhaften Ausführungsform der Erfindung sind Halteboden und/oder Be- bzw. Entwässerungsboden und/oder Auffangboden miteinander verbunden, beispielsweise über einen Steg entlang eines ihrer Längsränder, was durch zweimaliges Abkanten, durch Schweißen oder Verschrauben erfolgen kann. Auf diese Weise entsteht als integrales Bauteil eine sogenannte Kulturrinne, die mit ihrer Montage in der Aufnahmeeinrichtung mehrere Funktionen wie zum Beispiel Haltefunktion sowie Be- und Entwässerungsfunktion in einem übernimmt. Auch die Kulturrinne zeichnet sich wie dadurch aus, dass sie zumindest auf einer Längsseite zwischen Halteboden und Be- bzw. Entwässerungsboden bzw. Auffangboden derart offen ist, dass eine einfache und schnelle Zugänglichkeit zu den Aufnahmen gewährleistet ist, um Pflanzen über die offene Seite in die Aufnahmen zu setzen bzw. aus den Aufnahmen zu entnehmen. Die sich daraus ergebenden Vorteile entsprechend den vorbeschriebenen.

Die Erfindung wird nachstehend anhand eines in der Zeichnung dargestellten Ausführungsbeispiels näher erläutert, wobei weitere Merkmale und Vorteile der Erfindung offenbar werden. Das Ausführungsbeispiel stellt lediglich einen Weg der Realisierung der Erfindung dar, ohne sich jedoch darauf zu beschränken. Ebenso liegen Abwandlungen im Rahmen der Erfindung, die sich dem Fachmann aus vorliegenden Angaben ohne Weiteres ergeben.

Es zeigt
- Fig. 1: eine isometrische Ansicht auf die Vorderseite eines erfindungsgemäßen Automaten,
- Fig. 2: eine Ansicht auf die Rückseite des in Fig. 1 dargestellten Automaten,
- Fig. 3: eine Seitenansicht auf den in den Fig. 1 und 2 dargestellten Automaten in x-Richtung,
- Fig. 4: einen Schnitt durch den in Fig. 2 dargestellten Automaten entlang der dortigen Linie IV - IV,
- Fig. 5: eine Draufsicht auf den in den Fig. 1 bis 4 dargestellten Automaten,
- Fig. 6: eine Detailansicht auf den in Fig. 5 mit VI gekennzeichneten Bereich,
- Fig. 7: eine Detailansicht entgegen der x-Richtung des in Fig. 6 dargestellten Bereichs,
- Fig. 8: eine Detailansicht entgegen der y-Richtung des in Fig. 6 dargestellten Bereichs,
- Fig. 9: eine isometrische Ansicht auf eine erfindungsgemäße Kulturrinne,
- Fig. 10: einen Querschnitt durch die in Fig. 9 dargestellte Kulturrinne entlang der in Fig. 11 dargestellten Linie X -X,
- Fig. 11 a - f: jeweils eine Draufsicht auf eine Ausführungsform einer Aufnahme für eine Pflanze,
- Fig. 12: eine Schrägansicht auf die Vorderseite der Ausgabeeinrichtung,
- Fig. 13: eine Schrägansicht auf die Rückseite der Ausgabeeinrichtung,
- Fig. 14: eine Detailansicht auf den Betätigungsmechanismus der Ausgabeeinrichtung, und
- Fig. 15: eine Detailansicht auf den in Fig. 6 mit XV gekennzeichneten Bereich

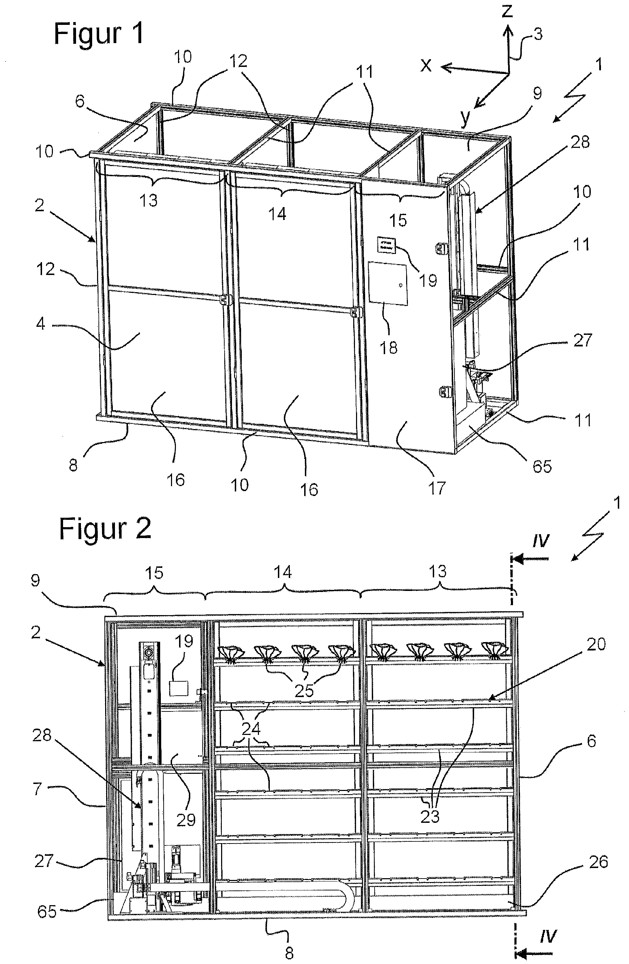

Die Fig. 1 bis 5 zeigen einen erfindungsgemäßen Automaten 1 in unterschiedlichen Ansichten und Schnitten. Der Automat 1 besitzt ein etwa schrankförmiges Gehäuse 2, dessen Breite, Tiefe und Höhe den Achsen x, y und z eines kartesischen Koordinatensystems 3 entsprechen. Das Gehäuse 2 besitzt eine Vorderwand 4, eine Rückwand 5, zwei Seitenwänden 6, 7, einen Gehäuseboden 8 und einen Gehäusedeckel 9, die im Wesentlichen von Tragprofilen 10, 11, 12 in x-Richtung, y-Richtung und z-Richtung gebildet und zum Beispiel mit Blechen oder Verkleidungen aus Kunststoff ausgefacht sind. Zur verbesserten Wärmedämmung können die Gehäusewände 4, 5, 6, 7 sowie der Gehäuseboden 8 und der Gehäusedeckel 9 aus wärmedämmendem Material bestehen oder eine solche Schicht aufweisen. Um das Gehäuseinnere besser erkennen zu können, sind in der Zeichnung die Ausfachungen der Seitenwänden 6, 7, der Rückwand 5 und des Gehäusebodens 8 sowie Gehäusedeckels 8 nicht dargestellt.

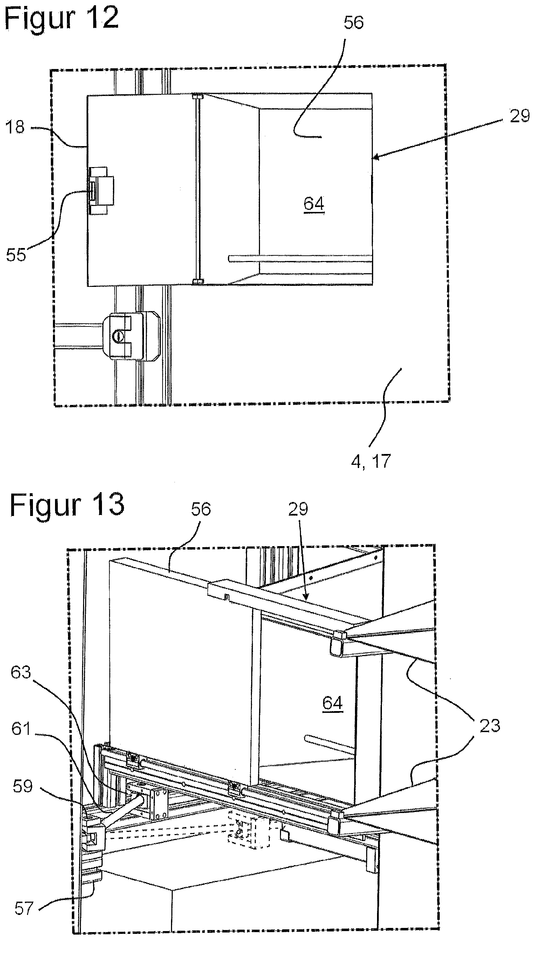

Das Gehäuse 2 ist in x-Richtung unterteilt in einen in Fig. 1 links dargestellten ersten Gehäuseabschnitt 13, einen mittleren zweiten Gehäuseabschnitt 14 und einen rechts dargestellten dritten Gehäuseabschnitt 15. Im Bereich des ersten Gehäuseabschnitts 13 und zweiten Gehäuseabschnitts 14 besitzt das Gehäuse 2 jeweils eine aufschwenkbare Tür 16, deren Türblatt transparent ausgebildet ist, um den Blick ins Gehäuseinnere zu ermöglichen. Im dritten Gehäuseabschnitt 15 ist die Vorderwand 4 von einer ebenfalls aufschwenkbaren Tür 17 aus Blech gebildet mit einer mittels einer Klappe 18 verschließbaren Öffnung (Fig. 12) und mit einer Bedieneinrichtung 19 zur Dateneingabe im Zuge des Auswahl- und Bezahlvorgangs. Die Bedieneinrichtung 19 weist zu diesem Zweck ein Display, ein Tastaturfeld und gegebenenfalls ein Kartenlesegerät oder andere Bezahleinrichtung auf.

Die Gehäuseabschnitte 13, 14, 15 bilden jeweils ein Gehäusemodul, so dass durch Aneinanderreihung ein beliebiger Anzahl Gehäusemodule, beispielsweise mehrere Gehäuseabschnitte 13 bzw. 14, die Länge des Automaten 1 und damit seine Aufnahme- und Leistungskapazität an den Bedarf angepasst werden können.

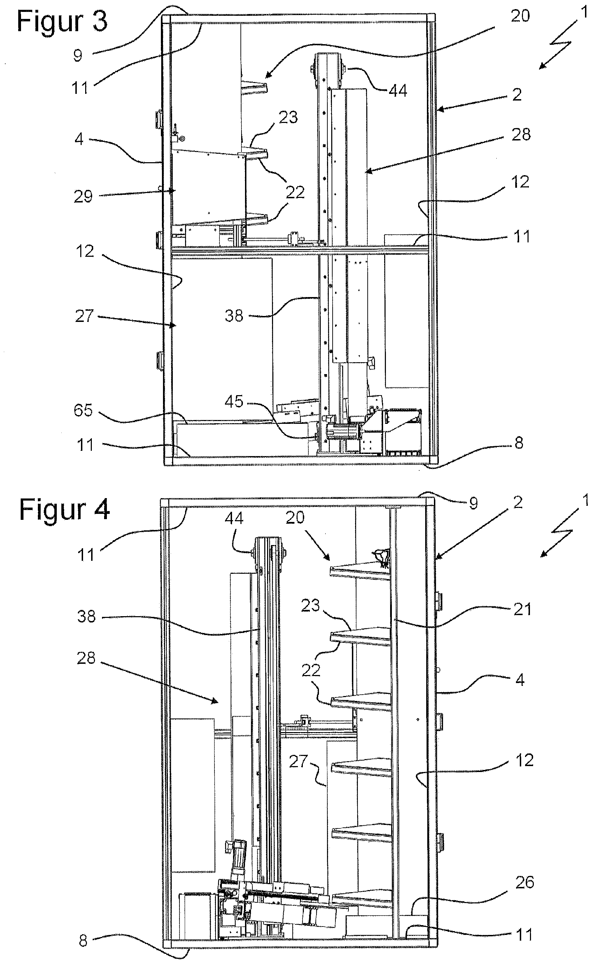

Wie vor allem aus den Fig. 2 bis 5 hervorgeht erstreckt sich im Inneren des Gehäuses 2 über den ersten und zweiten Gehäuseabschnitt 13, 14 entlang der Vorderwand 4 eine regalartige Aufnahmeeinrichtung 20. Zur Aufnahmeeinrichtung 20 gehören Regalpfosten 21, die sich in einheitlichem lichten Abstand zur Vorderwand 4 vom Gehäuseboden 8 bis zum Gehäusedeckel 9 erstrecken, an denen sie befestigt sind. Die Regalpfosten 21 weisen an ihrer der Rückwand 5 zugewandten Seite Konsolträger 22 auf, die mit einem Gefälle zum jeweiligen Regalpfosten 21 montiert sind. Dabei fluchten die Konsolträger 22 aller Regalpfosten 21 etagenartig auf den einzelnen Höhenlagen (Fig. 4).

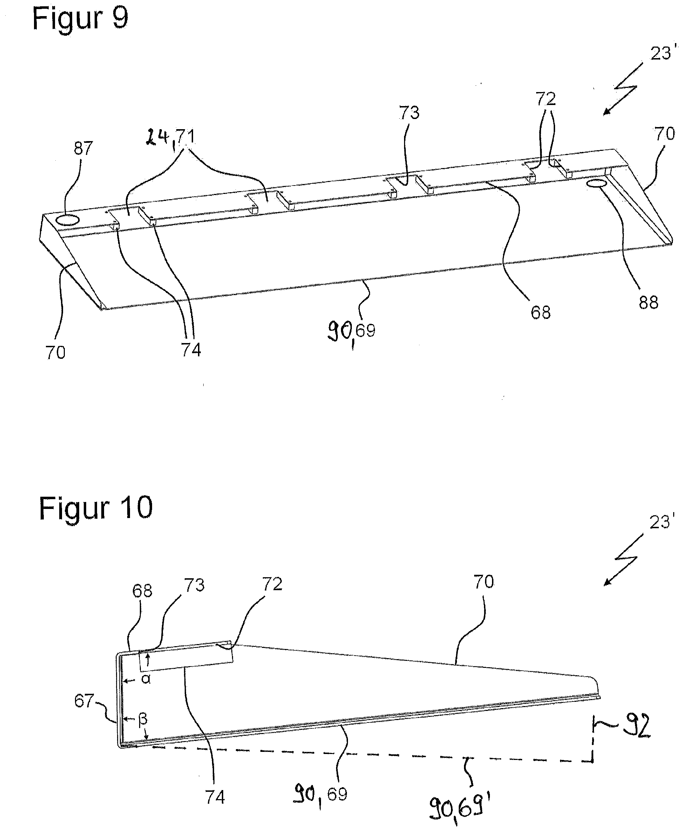

Die Konsolträger 22 einer gleichen Höhenlage tragen jeweils eine Kulturrinne 23, von denen jede eine Anzahl von Aufnahmen 24 besitzt, in denen jeweils eine Pflanze 25 wie zum Beispiel ein Salatkopf gehalten ist (Fig. 2). Der Aufbau und die Funktion der Kulturrinnen 23 sind im Einzelnen unter den Fig. 9 bis 11 beschrieben. Unterhalb der Aufnahmeeinrichtung 20 ist eine erste Auffangwanne 26 zum Sammeln des von den Pflanzen 25 abtropfenden Wassers angeordnet.

Der dritte Gehäuseabschnitt 15 nimmt in dem hinter der Tür 17 liegenden unteren Bereich eine Einrichtung 27 zur Be- und Entwässerung sowie zur Wasseraufbereitung auf. Im Wesentlichen umfasst die Einrichtung 27 einen Vorratsbehälter, aus dem Wasser mittel einer Pumpe und einem Leitungssystem zu den einzelnen Kulturrinnen 23 gepumpt wird. Der Rücklauf von den Kulturrinnen 23 erfolgt wiederum über ein Leitungssystem, wobei das Wasser vor Einleitung in den Vorratbehälter einer Aufbereitungsstation zugeführt wird, der beispielsweise einen Filter und/oder eine UV-Beleuchtung umfasst. In diesem Bereich ist optional auch ein Klimagerät untergebracht, das die Temperatur und/oder Feuchtigkeit im Gehäuseinneren regelt. Unterhalb der Einrichtung 27 ist wiederum eine zweite Auffangwanne 65 vorgesehen.

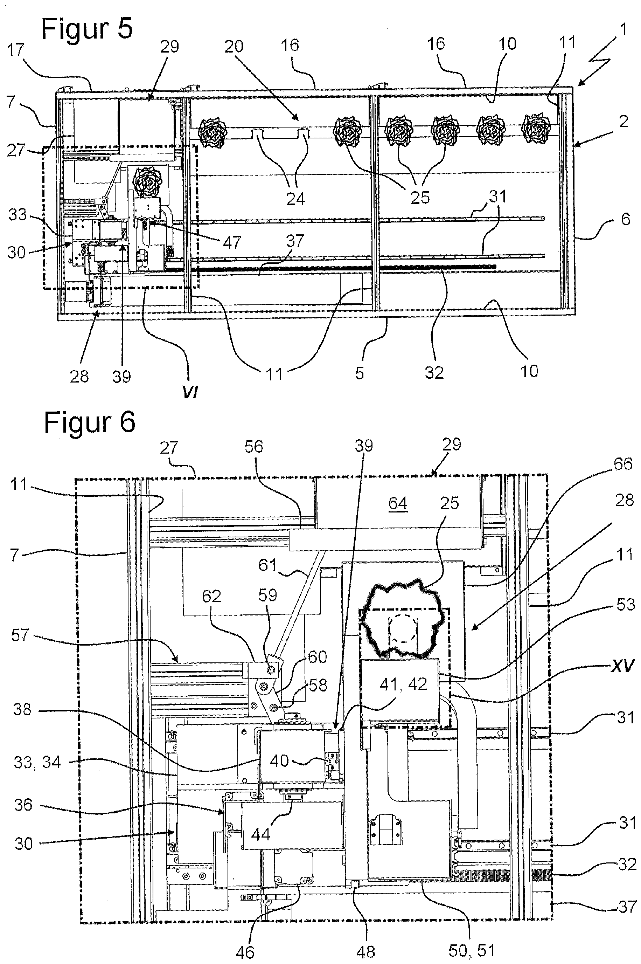

Die Positioniereinrichtung 28 für das Handling der Pflanzen 25 innerhalb des Automaten 1 ist in den Fig. 2 bis 5 im Überblick und in den Fig. 6 bis 8 im Detail dargestellt. Sie erstreckt sich im rückwärtigen, an die Rückwand 5 anschließenden Gehäusebereich über alle Gehäuseabschnitte 13, 14, 15 und ist damit in der Lage, sowohl den Bereich der Aufnahmeeinrichtung 20 als auch den der Ausgabeeinrichtung 29 zu erreichen. Aufgabe der Positioniereinrichtung 28 ist es, eine ausgewählte Pflanze 25 aus der entsprechenden Aufnahme 24 zu holen und in der Ausgabeeinrichtung 29 zur Entnahme durch den Käufer bereitzulegen.

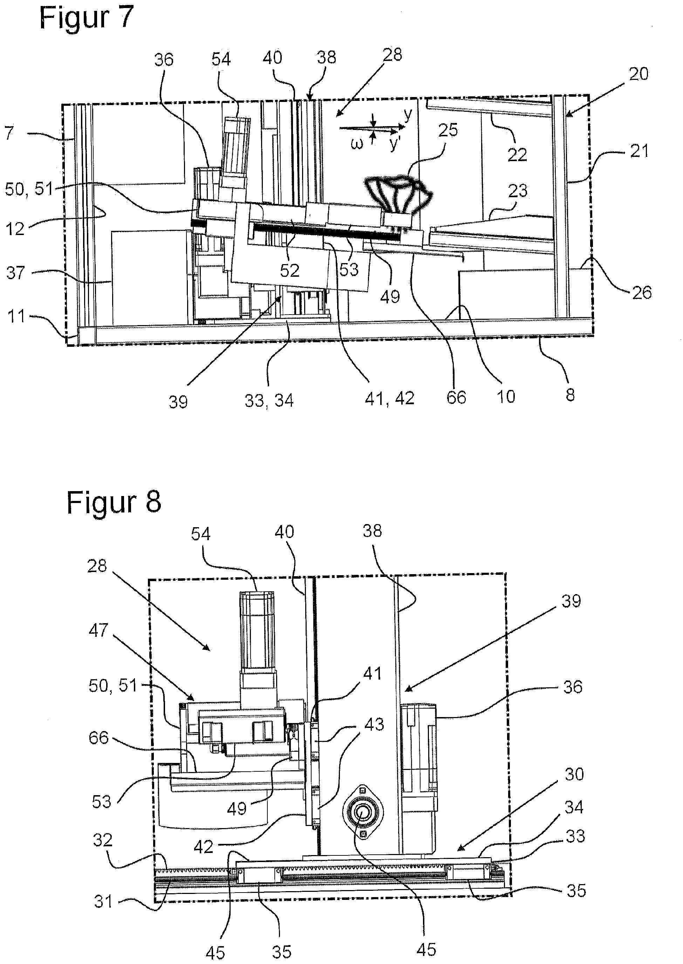

Dazu besitzt die Positioniereinrichtung 28 einen in x-Richtung wirkenden, ersten Linearantrieb 30 mit zwei parallel zueinander, in x-Richtung verlaufenden Führungsschienen 31 und einer parallel dazu verlaufender Zahnstange 32, die alle starr an den Tragprofilen 11 des Gehäusebodens 8 befestigt sind (Fig. 5). Die Führungsschienen 31 bilden eine Bahn für einen Schlitten 33, der im Wesentlichen aus einer Montageplatte 34 und an deren Unterseite angeordneten ersten Laufwagen 35 besteht, die die Führungsschienen 31 formschlüssig und dabei längsverschieblich umgreifen. Der Antrieb für den Schlitten 33 besorgt ein auf dem Schlitten 33 mitfahrender Elektromotor 36, der über ein Getriebe und Zahnrad in Wirkeingriff mit der Zahnstange 32 steht und über eine Energieführungskette 37 mit Energie versorgt wird (Fig. 5 und 8). Der Schlitten 33 trägt eine Säule 38, die als Teil eines in z-Richtung wirkenden, zweiten Linearantriebs 39 biegsteif auf der Oberseite der Montageplatte 34 befestigt ist und sich in z-Richtung über die gesamte Höhe der Aufnahmeeinrichtung 20 erstreckt. Entlang der in x-Richtung weisenden Außenseite der Säule 38 ist ein Führungsprofil 40 befestigt, auf dem ein zweiter Schlitten 41 mit einer zweiten Montageplatte 42 und zweiten Laufwagen 43 längsverschieblich gelagert ist (Fig. 8).

Im Inneren der Säule 38 ist ein umlaufender Zahnriemen oder eine Kette über ein oberes Zahnrad um eine obere Achse 44 und über ein unteres Zahnrad um eine untere Achse 45 geführt. Das untere Zahnrad ist über einen auf dem ersten Schlitten 33 montierten Elektromotor 46 angetrieben. Für den Antrieb des zweiten Schlittens 41 ist der Zahnriemen bzw. die Kette kraftschlüssig mit dem zweiten Schlitten 41 verbunden.

Darüber hinaus besitzt die Positioniereinrichtung 28 noch einen quer zur x- und z-Richtung wirkenden, auf dem zweiten Schlitten 41 mitfahrenden dritten Linearantrieb 47. Der dritte Linearantrieb 47 umfasst ein an der zweiten Montageplatte 42 befestigtes Führungsprofil 48 und eine parallel unterhalb dazu befestigte Zahnstange 49. Führungsprofil 48 und Zahnstange 49 sind in der y-z-Ebene um einen Winkel ω um die x-Achse nach unten verschwenkt, wodurch der dritte Linearantrieb 47 in einer zu den Konsolträgern 22 parallelen Richtung wirkt. Diese Richtung wird im Weiteren als y'-Richtung bezeichnet (Fig. 7 und 8). Der Winkel ω kann beispielsweise in einem Bereich zwischen 3° und 7° liegen, vorzugsweise zwischen 4° und 6°. Im vorliegenden Ausführungsbeispiel beträgt der Winkel ω 5°.

Ferner umfasst der dritte Linearantrieb 47 einen dritten Schlitten 50 mit einer Winkelschiene 51, die wiederum über daran befestigte Laufwagen entlang des Führungsprofils 48 verschieblich am zweiten Schlitten 41 gelagert ist. Die Winkelschiene 51 geht in einen in Richtung der Aufnahmerichtung 20 weisenden auskragenden Haltearm 52 über, an dessen freiem Ende ein Greifer 53 befestigt ist. Für den Antrieb des dritten Schlittens 50 und damit des Greifers 53 in y'-Richtung ist auf der Winkelschiene 51 ein Elektromotor 54 angeordnet, auf dessen Welle ein mit der Zahnstange 49 kämmendes Zahnrad sitzt.

Die nicht dargestellte Datenverarbeitungs- und Steuerungseinrichtung, die zum einen die beim Auswählen und Bezahlen am Bedienterminal 19 anfallenden Informationen erfasst und verarbeitet und die zum anderen die zur Ausgabe der Pflanze 25 notwendigen Datensätze zur Steuerung der Positioniereinrichtung 28 einschließlich Greifer 53 und der Ausgabeeinrichtung 29 erstellt und übermittelt, kann sich an einem freien Platz im Gehäuse 2 befinden oder als eigenständiges Modul in einem Schaltschrank an der Außenseite des Gehäuses 2 angeordnet sein.

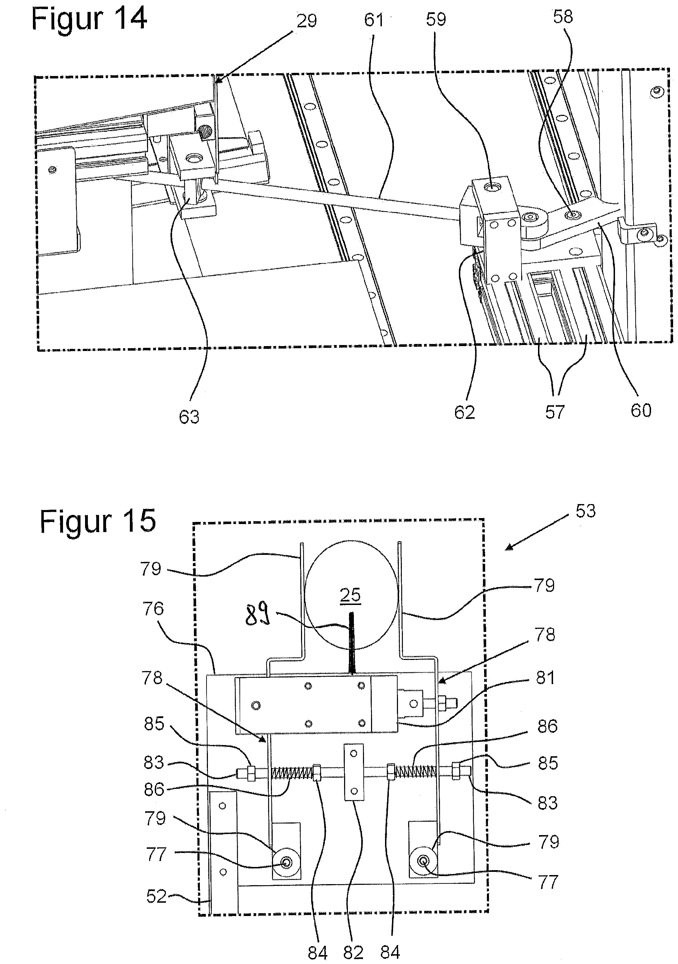

Der konstruktive Aufbau des Greifers 53 geht vor allem aus Fig. 15 hervor, die den in Fig. 6 mit XV gekennzeichneten Bereich in größerem Maßstab und ohne Greiferabdeckung zeigt. Man sieht eine Basisplatte 76 die starr am Ende des Haltearms 52 der Positioniereinrichtung 28 befestigt ist (Fig. 6). An ihrem der Rückwand 5 zugewandten Randbereich ragen senkrecht aus der Oberfläche der Basisplatte 76 zwei in x-Richtung beabstandete Lagerachsen 77, an denen jeweils das rückwärtige Ende eines bandförmigen Greifbackens 78 mittels eine Gleitbuchse 79 angelenkt ist. Die Greifbacken 78 bestehen beispielsweise aus einem Stahl- oder Kunststoffband, vorzugsweise mit elastischen Eigenschaften, und sind in y'-Richtung zum gegenüberliegenden frei auskragenden Ende hin zweimal gekröpft, wodurch jeweils zwei sich ungefähr parallel gegenüberliegende Halteabschnitte 79 entstehen, zwischen denen eine Pflanze 25 bei deren Ergreifen zu liegen kommt.

Im Bereich des Greifers 53 können zudem Mittel zur Lagesicherung der Pflanze 25 während des Handlings vorgesehen sein. So können die Greifbacken 78 im Kontaktbereich mit der Pflanze 25 eine nicht dargestellte Profilierung aufweisen, beispielsweise in Form von Noppen, Riffelleisten, einer Wellenstruktur und dergleichen, um den aufrechten Halt der Pflanze 25 zu verbessern. Alternativ oder kumulativ ist es möglich, am Greifer 53 mindestens einen Dorn 89 vorzusehen, der sich mittig zwischen und parallel zu den Greifbacken 78 erstreckt und bei Annäherung des Greifers 53 an die Pflanze 25 in diese eindringt.

Etwa mittig zwischen dem angelenkten Ende eines Greifbackens 78 und dem frei auskragenden Ende sind die beiden Greifbacken 78 über einen in x-Richtung wirkenden Linearaktor 81 verbunden. Der Linearaktor 81 ist lediglich an den Greifbacken 78 aufgehängt und schwebt ansonsten frei über der Basisplatte 76. Bei Aktivierung des Linearaktors 81 werden die beiden Greifbacken 78 mit entgegengesetztem Drehsinn um die Lagerachsen 77 geschwenkt, was ein Öffnen bzw. Schließen der Halteabschnitte 80 bewirkt.

Ferner ist mittig zwischen den beiden Greifbacken 78 in dem Bereich zwischen den angelenkten Enden und dem Linearaktor 81 ein Lagerklotz 82 fest mit der Basisplatte 76 verbunden, der von einem in x-Richtung verlaufenden Gewindebolzen 83 durchsetzt ist. Die freien Enden des Gewindebolzens 83 erstrecken sich jeweils lose durch die Greifbacken 78. Auf den zwischen Lagerklotz 82 und Greifbacken 78 liegenden Abschnitten des Gewindebolzens 83 sitzt jeweils eine ein- und feststellbare innere Schraubenmuttern 84, auf den außerhalb der Greifbacken 78 liegenden Endabschnitten jeweils eine ein- und feststellbare äußere Schraubenmutter 85. Auf den beiden Abschnitten zwischen innerer Schraubenmutter 84 und Greifbacken 78 ist jeweils eine vorgespannte Druckfeder 86 auf den Gewindebolzen 83 aufgeschoben, die in Ruhestellung des Greifers 53 die Greifbacken 78 jeweils gegen die äußere Schraubemutter 85 spannt.

Zum Ergreifen einer Pflanze 25 wird der Linearaktor 81 aktiviert. Beispielsweise kann es sich bei dem Linearaktor 81 um einen elektromagnetischen Aktor handeln, der bei seiner Betätigung die beiden Greifarme 78 entgegen der Kraft der Druckfedern 86 aufeinander zuschwenkt, wodurch sich der Abstand zwischen den Halteabschnitten 80 verkleinert. Nach Deaktivierung des Linearaktors 81 drücken die beiden Druckfedern 86 die Greifbacken 78 in ihre Ruhestellung zurück, wodurch sich die Haltabschnitte 80 öffnen und die Pflanze 25 freigeben.

Der Greifer 53 der Positioniereinrichtung 28 ist mittels des ersten Linearantriebs 30 in x-Richtung bewegbar, mittels des zweiten Linearantriebs 39 in z-Richtung und mittels des dritten Linearantriebs 47 in y'-Richtung. Durch eine kombinierte Steuerung der drei Linearantriebe 30, 39, 47 lässt sich der Greifer 53 zu jeder Aufnahme 24 der Aufnahmeeinrichtung 20 bewegen, um eine dort vorhandene Pflanze 25 zu ergreifen und zur Ausgabeeinrichtung 29 zu befördern. Damit beim Transport der Pflanze 25 von einer Aufnahme 24 zum Ausgabefach 64 weder Wasser noch Erde nach unten fallen, ist an der Unterseite des Greifers 53 unterhalb der Greifbacken 78 ein Tropfblech 66 fest montiert.

Die Ausgabeeinrichtung 29, deren Aufbau und Funktionsweise sich vor allem aus den Fig. 12 bis 14 ergibt, besteht im Wesentlichen aus einem allseits geschlossenen Ausgabefach 64, das für den Käufer der Pflanze 25 über die bereits erwähnte Klappe 18 in der Vorderwand 4 zugänglich ist. Die Klappe 18 ist zum Öffnen des Ausgabefachs 64 zur Seite aufschwenkbar, nachdem der Schließmechanismus 55 von der Steuerungseinrichtung 27 freigegeben worden ist. Im Inneren des Ausgabefachs 64 sieht man ein stabförmiges Rückhalteelement 56, das ein ungewolltes Herausfallen der Pflanze 25 während des Öffnens der Klappe 18 verhindert.

Die der Klappe 18 gegenüberliegende hintere Wand 56 des Ausgabefachs 54 ist zum Bestücken des Ausgabefachs 54 mit einer Pflanze 25 entlang der Achsen 56 in x-Richtung seitlich verschiebbar. Der Mechanismus zum Öffnen der hinteren Wand 56 ist an die Bewegung des ersten Linearantriebs 30 gekoppelt. Wie vor allem aus den Fig. 12 bis 14 hervorgeht umfasst der Mechanismus eine starr an den Tragprofilen 11, 12 der Seitenwand 7 angeordnete Konsole 57 mit einer ersten Lagerachse 58 und einer zweiten Lagerachse 59, die beide in z-Richtung weisen. Auf der ersten Lagerachse 58 sitzt ein zweiarmiger Hebel 60, dessen einer Arm von der Säule 38 beim Bewegen des ersten Linearantriebs 30 in Endstellung betätigt wird und dessen anderer Arm gelenkig mit dem Ende eines Schwenkstabs 61 verbunden ist. Der Schwenkstab 61 ist wiederum längsverschieblich in einem Haltebügel 62 gelagert, der drehbar auf der zweiten Lagerachse 59 sitzt. Das freie Ende des Schwenkstabs 61 ist längsverschieblich in einer um die z-Richtung verdrehbaren Lagerhülse 63 an der hinteren Wand 56 gehalten.

Eine erfindungsgemäße Kulturrinne 23, von der in den Fig. 9 und 10 ein Element 23' genauer dargestellt ist, ist Teil der Aufnahmeeinrichtung 20 und erstreckt sich in zum Beispiel sechs übereinanderliegenden Etagen über den ersten Gehäuseabschnitt 13 und zweite Gehäuseabschnitt 14, woraus sich eine regalartige Ausbildung der Aufnahmeeinrichtung 20 ergibt (Fig. 2). Es ist möglich, dass sich ein Element 23' über nur einen Gehäuseabschnitt 13 bzw. 14 erstreckt oder über alle Gehäuseabschnitte 13 und 14.

Wie vor allem aus Fig. 10 ersichtlich besitzt eine erfindungsgemäße Kulturrinne 23 einen etwa U-förmigen, liegend angeordneten Querschnitt mit einem nach der Montage in der Aufnahmeeinrichtung 20 in Schwerkraftrichtung weisenden aufrechten Steg 67, von dessen oberem Längsrand sich als oberer Schenkel ein Halteboden 68 erstreckt und von dessen unterem Längsrand als unterer Schenkel einen kombinierten Be- und Entwässerungsboden 90 und Auffangboden 69. Die stirnseitigen Enden der Kulturrinne 23 bildet jeweils eine Stirnwand 70.

Der Halteboden 68 schließt mit dem Steg 67 einen Winkel α von mindestens 90° ein, der kombinierten Be-und Entwässerungsboden 90 und Auffangboden 69 einen Winkel β von maximal 90°. Vorzugsweise ist der Winkel α so gewählt, dass die Vorschubbewegung des Greifers 53 in y'-Richtung parallel zur Ebene des Haltebodens 68 ausgeführt wird, und der Winkel β so, dass der Be-und Entwässerungsboden 90 und Auffangboden 69 planparallel zum Halteboden 67 liegen.

Die auf die y'-Richtung bezogene Breite des Auffangbodens 69 ist größer als die entsprechende Breite des Haltebodens 68 und beträgt zum Beispiel mindestens dem Zweifachen oder mindestens Dreifachen der Breite des Haltebodens 68, so dass der Auffangboden 69 in der Lage ist, beim Herausnehmen einer Pflanze 25 mit seinem über den Halteboden 68 überstehenden Bereich abtropfendes Wasser und/oder Erde aufzufangen und darunter angeordnete Pflanzen zu schützen. Im vorliegenden Ausführungsbeispiel ist der Auffangboden 69 ungefähr viermal so breit wie der Halteboden 68. Zusammen mit dem sich bei einem Winkel β von weniger als 90° ergebenden Quergefälle hin zum Steg 67 entsteht vor allem im Bereich unterhalb des Haltebodens 68 ein Gerinne in Längsrichtung der Kulturrinne 23, in dem sich Wasser sammelt und über das die Kulturrinne 23 be- und entwässerbar ist. Die Kulturrinne 23 kann zur besseren Be- und Entwässerung zusätzlich mit Längsgefälle in der Aufnahmeeinrichtung 20 angeordnet sein.

Möglich ist auch eine Variante, bei der der Winkel β 90° oder mehr beträgt. Um auch in diesem Fall ein Gerinne ausbilden zu können, ist entlang des freien Längsrandes des Auffangbodens 69' ein nach oben weisender Steg 92 vorgesehen (Fig. 10, gestrichelte Darstellung).

Zur Bewässerung der Pflanzen 25 besitzt eine erfindungsgemäße Kulturrinne 23 an ihrem einen stirnseitigen Ende einen Zulauf 87 und am gegenüberliegenden Ende einen Ablauf 88. Zulauf 87 und/oder Ablauf 88 können beispielsweise von einer Öffnung oder einem Stutzen im Halteboden 68, Auffangboden 69, Steg 67 oder in der Stirnwand 70 gebildet sein, die an eine Be- bzw. Entwässerungsleitung angeschlossen sind.

Der Halteboden 68 gemäß Fig. 9 weist über seine Länge eine Anzahl Aufnahmen 24 auf, die in der Draufsicht jeweils einen recheckförmigen Umriss besitzen mit zwei sich gegenüberliegenden Seiten 72 und einem die Seiten 72 verbindenden Grund 73. An der dem Auffangboden 69 zugewandten Unterseite weist der Halteboden 68 entlang der Seiten 72 jeweils einen Anlagesteg 74 auf, der aber auch auf der Oberseite oder auf Ober- und Unterseite und/oder entlang des Grunds 73 verlaufen kann. Der Anlagesteg 74 dient mit seinen Anlageflächen unter anderem der besseren Positionierung der Pflanze 25 in der Aufnahme 24.

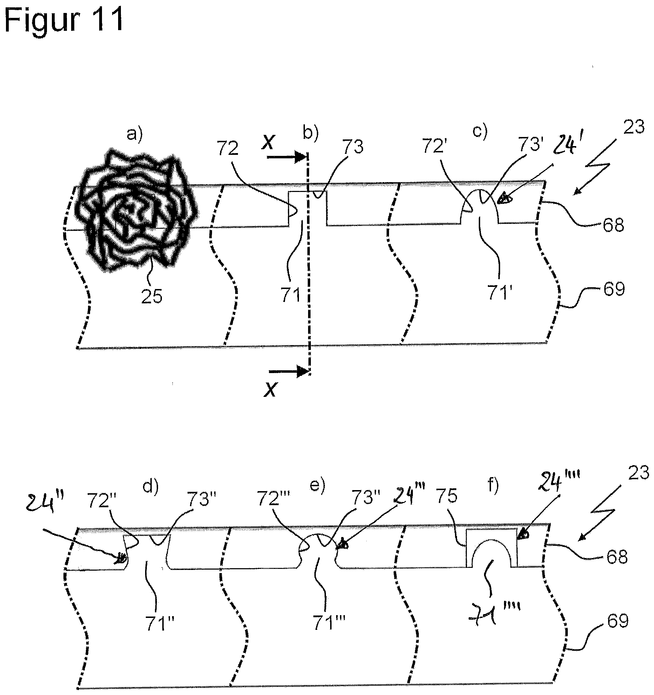

Wie beispielsweise Fig. 11a) entnommen werden kann dienen die Aufnahmen 24 zur Aufnahme einer Pflanze 25, im vorliegenden Ausführungsbeispiel eines Salats, der mit seinem Wurzelballen durch die rechteckförmigen Randausnehmungen 71 reicht und dabei an den Seiten 72 und dem Grund 73 der Aufnahme 24 anliegt. Der Wurzelballen erstreckt sich mit seinem größten Teil unterhalb des Haltebodens 68 bis hin zum Entwässerungs- und Auffangboden 69, während die Salatblätter oberhalb des Haltebodens 68 liegen.

Zu diesem Zweck geeignete Varianten der Randausnehmungen 71 sind Gegenstand der Fig. 11 b) bis f), wobei Fig. 11b) eine rechteckförmige, insbesondere quadratische Aufnahme 24 betrifft, wie sie auch schon in Fig. 5 dargestellt und beschrieben ist.

Davon unterscheidet sich die Ausnehmung 24' gemäß Fig. 11c) durch einen gekrümmten Verlauf der Seiten 72' und des Grunds 73' der Randausnehmung 71'. Vorzugsweise besitzen die Randausnehmungen 71' die Form einer Halbellipse oder eines Halbkreises und folgen auf diese Weise der natürlichen Form einer Pflanze 25, was die Anlagefläche vergrößert und den Halt der Pflanze 25 in der Aufnahme 24 verbessert.

Die Varianten gemäß der Fig. 11d) und e) zeichnen sich dadurch aus, dass die Seiten 72" bzw. 72'" eine Hinterscheidung an der Randausnehmung 71" bzw. 71'" bilden, wodurch sich die Randausnehmungen 71" bzw. 71'" zum Grund 73" bzw. 73'" hin weiten. Auf diese Weise üben die Seiten 72" bzw. 72'" eine gewisse Rückhaltekraft gegen ungewolltes Herausfallen einer Pflanze 25 aus einer Aufnahme 24" bzw. 24'" aus.

Alternativ oder kumulativ können sich die Randausnehmungen 71" bzw. 71'" im Übergangsbereich zum freien Längsrand des Haltebodens 68" bzw. 68'" auch weiten, um das Bestücken einer Kulturrinne 23 mit Pflanzen 25 zu erleichtern, indem die Seiten 72" bzw. 72'" zum freien Längsrand des Haltebodens 68 eine Art Einfädeltrichter bilden.

Fig. 11f) zeigt schließlich eine Variante, bei der die Aufnahme 24"" von einem Einsatzteil 75 gebildet ist, das formschlüssig in die Randausnehmung 71"" eingesetzt ist. Das Einsatzteil 75 kann beispielsweise ein austauschbares Kunststoffspritzgussteil sein. Damit kann eine Aufnahme 24 einer damit ausgerüstete Kulturrinne 23 ohne großen Aufwand an die jeweilige Art der Pflanze 25 angepasst bzw. umgerüstet werden. Beispielsweise kann das Einsatzteil 75 eine Innenkontur aufweisen wie unter den Fig. 11b bis 11e beschrieben.

## Patentansprüche

1. Automat zum Verkauf von Pflanzen (25), insbesondere Nutz- und Zierpflanzen wie Salate, Gemüse, Blumen und dergleichen, mit
- einem Gehäuse (2) mit einer Vorderwand (4) und einer Rückwand (5), wobei die Vorderwand (4) zumindest teilweise transparent ausgebildet ist,
- einer innerhalb des Gehäuses angeordneten regalartigen Aufnahmeeinrichtung (20) mit Aufnahmen (24), wobei die Pflanzen (25) in den Aufnahmen (24) gehalten und durch den transparenten Bereich der Vorderwand (4) sichtbar sind,
- einer Bedieneinrichtung (19) zum Auswählen und Bezahlen der ausgewählten Pflanze (25),
- einer Ausgabeeinrichtung (29) zur Entnahme der ausgewählten Pflanze (25) aus dem Automat (1),
- einer Positioniereinrichtung (28) zur Entnahme der ausgewählten Pflanze (25) aus der Aufnahmeeinrichtung (20) und Ablage der Pflanze (25) in der Ausgabeeinrichtung (29), und
- einer Steuerungseinrichtung zur Verarbeitung der Daten aus der Bedieneinrichtung sowie Steuerung der Positioniereinrichtung (28) und Ausgabeeinrichtung (29).

2. Automat nach Anspruch 1, **dadurch gekennzeichnet, dass** die Aufnahmeeinrichtung (20) entlang einer Längsseite derart offen ausgebildet ist, dass eine Zugänglichkeit für die Positioniereinrichtung (28) zu den Aufnahmen (24) über die offene Längsseite gegeben ist.

3. Vorrichtung nach Anspruch 1 oder 2, **dadurch gekennzeichnet, dass** die Aufnahmeeinrichtung mindestens einen Halteboden (68) besitzt, in dem die Aufnahmen (24) angeordnet sind.

4. Automat nach einem der Ansprüche 1 bis 3, **dadurch gekennzeichnet, dass** im Bereich der Aufnahmen (24) eine Bewässerungseinrichtung zur Versorgung der Pflanzen (25) mit Wasser angeordnet ist, vorzugsweise zusätzlich eine Entwässerungseinrichtung.

5. Automat nach Anspruch 4, **dadurch gekennzeichnet, dass** die Bewässerungseinrichtung und/oder Entwässerungseinrichtung einen Be- und/oder Entwässerungsboden (90) besitzt, der unterhalb der Aufnahmen (24) angeordnet ist.

6. Automat nach einem der Ansprüche 1 bis 5, **dadurch gekennzeichnet, dass** im Bereich der Aufnahmen (24) und/oder der Positioniereinrichtung (28) und/oder der Ausgabeeinrichtung (29) eine Auffangeinrichtung für Wasser, Erde und Pflanzenteile angeordnet ist.

7. Automat nach Anspruch 6, **dadurch gekennzeichnet, dass** die Auffangeinrichtung einen Auffangboden (69) besitzt, der unterhalb des Be- und/oder Entwässerungsboden (90) angeordnet ist oder der in den Be- und/oder Entwässerungsboden (90) integriert ist.

8. Automat nach einem der Ansprüche 1 bis 7, **dadurch gekennzeichnet, dass** eine Einrichtung zur Klimatisierung des Gehäuseinneren des Automaten (1) vorgesehen ist.

9. Automat nach einem der Ansprüche 1 bis 8, **dadurch gekennzeichnet, dass** die Positioniereinrichtung (28) einen Greifer (53) besitzt, der zwischen Aufnahmeeinrichtung (20) und Ausgabeeinrichtung (29) bewegbar ist.

10. Automat nach Anspruch 9, **dadurch gekennzeichnet, dass** die Positioniereinrichtung (28) zur Positionierung des Greifers (53) einen Roboterarm besitzt, der um ein und/oder zwei und/oder drei Achsen rotierbar ausgebildet ist.

11. Automat nach Anspruch 9 oder 10, **dadurch gekennzeichnet, dass** die Positioniereinrichtung (28) zur Positionierung des Greifers (53) einen ersten Linearantrieb (30) besitzt, mit dem der Greifer (53) in und entgegen der x-Richtung verfahrbar ist und/oder einen zweiten Linearantrieb (39) besitzt, mit dem der Greifer (53) in und entgegen der z-Richtung verfahrbar ist, und/oder einen dritten Linearantrieb (47) besitzt, mit dem der Greifer (53) in und entgegen der y'-Richtung verfahrbar ist.

12. Automat nach einem der Ansprüche 9 bis 11, **dadurch gekennzeichnet, dass** der Greifer (53) zwei Greifbacken (78) besitzt, deren eine Enden schwenkbar am Greifer (53) gelagert sind und deren andere Enden mittels mindestens eines Linearaktors (81) aufeinander zu- oder wegschwenkbar sind.

13. Kulturrinne zur Aufnahme von Pflanzen (25), insbesondere Nutz- oder Zierpflanzen wie Salate, Gemüse, Blumen und dergleichen, in einem Automaten nach einem der Ansprüche 1 bis 12, mit einem Halteboden (68), in dem mindestens eine Aufnahme (24) zur Halterung jeweils einer Pflanze (25) angeordnet ist und mit einem unterhalb des Haltebodens (68) angeordneten Entwässerungsboden (90) und/oder einem unterhalb des Haltebodens (68) angeordneten Auffangboden (69), wobei der Halteboden (68) und/oder Entwässerungsboden (90) und/oder Auffangboden (69) über einen Steg (67) miteinander verbunden sind.

14. Kulturrinne nach Anspruch 13, **dadurch gekennzeichnet, dass** die Kulturrinne entlang zumindest einer ihrer Längsseiten zwischen Halteboden (68) und/oder Entwässerungsboden (90) bzw. Auffangboden (69) derart offen ausgebildet ist, dass eine Zugänglichkeit zu den Aufnahmen (24) über die offene Längsseite gegeben ist.

15. Kulturrinne nach Anspruch 13 oder 14, **dadurch gekennzeichnet, dass** der Auffangboden (69) breiter ist als der Halteboden (68) und der Auffangboden (69) mit seinem freien Längsrand über den freien Längsrand des Haltebodens (68) übersteht.
